(19) Europäisches Patentamt
European Patent Office
Office européen des brevets

(11) Publication number: **0 125 554**
**B1**

(12) # EUROPEAN PATENT SPECIFICATION

(45) Date of publication of patent specification: **27.07.88**

(51) Int. Cl.⁴: **G 01 N 31/22**, G 01 N 33/52, G 01 N 33/84, C 07 C 119/00

(21) Application number: **84104824.2**

(22) Date of filing: **30.04.84**

(54) **Ion test means having a hydrophilic carrier matrix.**

(30) Priority: **12.05.83 US 493982**

(43) Date of publication of application:
**21.11.84 Bulletin 84/47**

(45) Publication of the grant of the patent:
**27.07.88 Bulletin 88/30**

(84) Designated Contracting States:
**AT BE CH DE FR GB IT LI LU NL SE**

(56) References cited:
**EP-A-0 010 615**
**EP-A-0 041 175**
**EP-A-0 128 317**
**EP-A-0 128 318**
**GB-A-1 271 209**
**US-A-3 856 649**
**US-A-4 234 313**
**US-A-4 272 485**
**CLINICAL CHEMISTRY, vol. 28, no. 9, September 1982, pages 1857-1861, Washington, US; S.C. CHARLTON et al.: "Solid-phase colorimetric determination of potassium"**
**ANGEWANDTE CHEMIE, International Edition, vol. 17, no. 11, 1978, pages 857-859, Weinheim, DE; J.P. DIX et al.: "Ion-selective crown ether dyes"**

(73) Proprietor: **MILES INC.**
**1127 Myrtle Street**
**Elkhart Indiana 46514 (US)**

(72) Inventor: **Charlton, Steven C.**
**1533 Strong Avenue**
**Elkhart, IN 45514 (US)**

(74) Representative: **Adrian, Albert, Dr. et al**
**c/o BAYER AG Konzernverwaltung RP**
**Patentabteilung**
**D-5090 Leverkusen 1, Bayerwerk (DE)**

(56) References cited:
**CHEMISCHE BERICHTE, vol. 109, no. 5, 1976, pages 1803-1831, Weinheim, DE; E. WEBER et al.: "Neue Kronenäther und ihre Alkalimetallion-Komplexe"**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

EP 0 125 554 B1

Courier Press, Leamington Spa, England.

## Description

### 1. INTRODUCTION

The present invention relates to the measurement of ions, in particular ions in aqueous solution, and to a test means or device for performing such measurements. The invention provides a quick, facile way of assaying such ions whereby results are available to the assayist momentarily after merely contacting a test sample solution with the test means or device. There is no need for cumbersome, expensive electronic equipment such as ion-specific electrodes, flame photometers, atomic absorption spectrophotometers or the like. Nor it is necessary to resort to time-consuming wet chemistry techniques such as titration and other laboratory procedures. The present invention enables the analyst to merely contact the test sample with a strip device or similar test means configuration, and observe any color change.

The determination of aqueous ion concentration has application in numerous technologies. In the water purification art, calcium concentration must be carefully monitored to assess the degree of saturation of an ion exchange resin deionizer. Measurement of sodium and other ions in seawater is important in the preparation of drinking water aboard a ship at sea. Measurement of the potassium level in blood aids the physician in diagnosis of conditions leading to muscle irritability and excitatory changes in myocardial function. Such conditions include oliguria, anuria, urinary obstruction and renal failure due to shock.

Needless to say, a quick, facile method for determining ion concentration would greatly enhance the state of these technologies, as well as any others where such rapid, accurate determinations would be beneficial. Thus, for example, if a medical laboratory technician could accurately measure the potassium or calcium level of a serum or whole blood sample in a manner of seconds or minutes, not only would such rapid results aid the physician in diagnosis, but also laboratory efficiency would increase manyfold.

### 2. BACKGROUND OF THE INVENTION

Prior to the present invention, methods for determining ions in solution included flame photometry, atomic absorption photometry and ion-specific electrodes. A test strip format has been disclosed in EP—A—41-175 (described in *Clin. Chem., 2819*:1857—1861 [1982] by Charlton). The use of certain compounds and compositions which selectively isolate certain ions from the sample solution has become popular in ion-specific electrodes. These substances, known as ionophores, have the capability of selectively isolating ions from their counterions thereby causing a charge separation and a corresponding change in electrical conductivity in the phase containing the ionophore. Illustrative of the ion/ionophore phenomenon include ion assays utilizing membrane electrodes, liquid/liquid partitioning and fluorescence.

#### 2.1 Ion-Specific Electrodes/Ion Selective Membranes

When two solutions having different concentrations of ions are separated by an electrically conductive membrane, an electrical potential (EMF) is generated. In such membrane separation cells, the membrane can be simple fritted glass barrier, allowing a small but measurable degree of ion diffusion from one solution to the other. Alternatively, a nonporous, electrically nonconductive film, such as polyvinyl chloride, impregnated with an ionophore can be employed. In the absence of the ionophore the film is an insulator and no EMF can be measured; when blended with an ionophore, charged ions are bound to the film and a small, measurable current can be induced to flow. Because the ionophore is selective in its affinity, and thus will bind only certain specific ions, such cells are ion selective. Any measurable EMF is due solely to the presence of those ions.

The current flowing across the membrane is so small that no significant quantity of potassium ion or counterion is transported through it. Electrical neutrality of the membrane is maintained either by a reverse flow of hydrogen ions, or by a parallel flow of hydroxyl ions. This anion effect can reduce the specificity of the electrode towards the specific ion to be determined and is an interference to be minimized.

A major difficulty in the use of such ion-selective electrodes has been the marked reduction of accuracy and speed of response over time. Further, small changes in ion concentration produce such small changes in EMF that sophisticated voltmeter equipment is required.

It has been known that certain antibiotics, such as valinomycin, have an effect on the electrical properties of phospholipid bilayer membranes (biological membranes), such that these antibiotics solubilize cations within the membrane, in the form of mobile charged couples, thereby providing a "carrier" mechanism by which cations can cross the insulating hydrocarbon interior of the membrane. Such complex carry the charge of the complex through the membrane such that a voltage differential can be determined between solutions on either side of the membrane.

Swiss Patent Application Serial No. 11428/66, filed August 9, 1966, (U.S. Patent No. 3,562,129) describes the use of porous membranes impregnated with macrocyclic derivatives of amino and oxy-acids in ion-sensitive electrodes. Materials used to form the membrane are glass frits and other porous membranes. Such electrodes are said to be effective in measuring ion activities.

United States Patent No. 4,053,381, issued to Hamblen, et al. discloses similar technology, and utilizes an ion specific membrane having ion mobility across it.

U.S. Patent No. 4,272,485 discloses the use of an ion selective membrane to form an optode. An ionophore is incorporated into a membrane which surrounds and forms a chamber containing a solution of an indicator which changes color in the presence of the ion. The arrangement requires transport of the ion

through the ion-selective membrane into the indicator solution (see figures and col. 3, lines 40 to 50). To increase the selectivity of the system, an arrangement of multiple ion-selective membranes and indicator solutions can be used. Both uses of the ion selective membrane, the electrode and the optode, require transport of the ion through the membrane to provide a measurable response.

2.2 Liquid/Liquid Partitioning

Another known application of ionophores in ion determination is through liquid/liquid partitioning. In this procedure, a hydrophobic ionophore is dissolved in an organic solvent immiscible with water. Eisenman et al, *J. Membrane Biol.* *1*:294—345 (1969) disclose the selective extraction of cations from aqueous solutions into organic solvents via macrotetralide actin antibiotics. This technique involves shaking an organic solvent phase containing the antibiotics with aqueous solutions containing cationic salts of lipid-soluble colored anions, such as picrates and dinitrophenolates. The intensity of color of the organic phase is then measured spectrophotometrically to indicate how much salt has been extracted. Phase transfer has also been studied by Dix et al., *Angew. Chem. Int. Ed. Engl.*, *17*:857 (1978) and in reviews including Burgermeister et al., *Top. Curr. Chem.*, *69*:91 (1977); Yu et al., "Membrane Active Complexones," Elsevier, Amsterdam (1974); and Duncan, "Calcium in Biological Systems," Cambridge University Press (1976).

Sumiyoshi, et al., *Talanta*, *24*:763—765 (1977) describes another method useful for determining potassium ion in serum. In this technique serum is deproteinated by trichloracetic acid, an indicator dye is added, and shaken with a solvent such as chloroform containing valinomycin.

Partitioning of a compound is rapid and effective between liquids, as shown by Eisenman, because of the mobility of the ionophore carrier and ions, which allows the transported species to diffuse rapidly away from the interface. Such a mechanism is normally impossible in the solid phase, because of the rigidity, immobility and essentially zero diffusion of materials in a solid phase.

2.3 Fluorescent Anions

Yet another approach to the measurement of ion activity in aqueous solutions utilizes fluorescent anions. Feinstein, et al., *Proc. Nat. Acad. Sci. U.S.A.*, *68*:2037—2041, (1971). It is stated that the presence of cation/ionophore complexes in organic solvents are known, but that complex formation in purely aqueous media had theretofore not been detected. Feinstein, et al., demonstrated the existence of such complexes in water through the use of the fluorescent salts 1-anilino-8-naphthalene sulfonate and 2-*p*-toluidinyl sulfonate.

It was found that interaction of the ionophore/cation complexes with the fluorescent dyes produced enhanced fluorescence emission, increased lifetime and polarization, and significant blue-shift at the emission maxima of the fluorescence spectrum. At constant concentrations of ionophore and fluorophore, the intensity of fluorescence emission was found to be a function of cation concentration.

2.4 Chromophore-labeled Ionophore

The ion assay disclosed in U.S. Patent No. 4,367,072 (equivalent to EP—A—10-614) is primarily directed toward the use of a chromogenic ionophore, i.e., an ionophore covalently linked to a chromogen. A charged chromogen-ionophore complex having the same charge as the ion to determined is also used. In use, a chromogenic ionophore or charged chromogen-ionophore complex is added to a liquid sample and the color of the solution is monitored spectrophotometrically. Mention is made of incorporating the ionophore into a carrier such as paper, synthetic resin film, silicon oxide, natural or synthetic fibers or metal.

GB 1,271,209 is entitled "Indicator for the Detection of Copper" and discloses a composition including a complex-forming agent for cuprous ions. The complexing agent changes color upon complexation of cuprous ions. The composition can be incorporated into a paper matrix by use of a two step procedure with the organic soluble components and the water soluble components incorporated separately.

Both the chromogenic ionophore and the chelating agent involve the use of a single species which both complexes the ion and changes color.

2.5 Test Strip Format

EP—A—41-175, commonly assigned herein, discloses an ion testing test device format wherein an ionophore is incorporated into a nonpolar layer of material and the migration of a detectable species to the surface of that layer is measured and related to the ion concentration to be measured. This test was discussed by the inventor in a publication, *Clin. Chem.* *28*(9):1857—1861 (1982). The publication discloses data which proves that the test is useful for measurement of serum potassium. The detectable species is preferably a counterion dye. In all embodiments the counterion is external to the nonpolar ionophore incorporated layer.

U.S. Patent No. 4,234,313 discloses a test composition wherein the indicator being response to the material being tested in such a manner it loses its color in a direct proportion to the amount of material present. A preferred indicator system for the detection of uric acid is a complexed iodine, an iodophor, which loses color with increasing concentration of uric acid. The loss of color of p-nitrophenol with a change in pH is also disclosed. No mention is made of ion testing with ionophores.

2.6 Summary

To summarize the background of technological developments leading up to the present invention, many methods are known for assaying ions in solution. Instrumental methods include such sophisticated techniques as ion-specific potentiometry, flame photometry and atomic absorption photometry. The use of ionophores which selectively complex with specific ions has led to four basic approaches: ion selective electrodes, liquid/liquid partitioning, fluorescence enhancement, and chromophore-labeled ionophore conjugates.

None of these approaches, however, affords the assayist simple, fast analysis results through contacting a test sample solution with a test means or device. The present invention, on the other hand, permits the assayist to merely contact the sample with a dip-and-read test strip or device of similar configuration, and observe a change in color or other detectable response. Moreover, the degree of such response can be regulated by varying the stoichiometry of the reactants which produce it.

3. BRIEF DESCRIPTION OF THE DRAWINGS

Performance data depicting dose/response measurements of various embodiments of the present invention is portrayed graphically in Figures I—VIII. The experiments in which the data was generated are described in section 9 herein, entitled "Examples".

4. SUMMARY OF THE INVENTION

The present invention resides in the discovery of a new test means for detecting the presence of an ion in an aqueous test sample and to determining its concentration. The test means comprises a hydrophilic carrier matrix incorporated with finely divided globules of a hydrophobic vehicle containing two principal ingredients: an ionophore capable of forming a complex with the ion, and a reporter substance capable of interacting with the complex of ionophore and ion to produce a detectable response, such as a change in or the appearance of color of fluorescence.

A test device incorporating the test means comprises an elongated support member, such as a plastic film, to one flat side of which is affixed the test means.

The invention resides also in developing a method for preparing a test device for determining the presence of an ion in an aqueous test sample, the method comprising the steps of

forming a first mixture of water and a hydrophilic polymer,

forming a second mixture of a hydrophobic vehicle, an ionophore capable of forming a complex with the ion, and a reporter substance capable of interacting with the complex of the ionophore and ion to produce a detectable response,

combining the first and second mixtures to produce a stable emulsion of finely divided globules of the second mixture in the first mixture,

coating the emulsion onto an elongated support member having an upper, substantially flat face, and

evaporating the water from the emulsion to produce a hydrophilic carrier matrix incorporated with finely divided globules of the second mixture, the matrix being thereby affixed to the flat face of the support member.

In use, the test sample is contacted with the test means or device. The presence and/or concentration of the ion is then determined by observing any detectable response produced.

The test means and device of the present invention provide rapid results, sufficient detectable response forming in most instances in at least a few minutes. No cumbersome, expensive testing equipment is required in addition to the present invention; the response can be of sufficient magnitude to enable direct visual detection. Moreover, it has been found that the color or other response produced in the test means is stable, in some instances for a period of days, such that a number of used test means can be set aside for reading at some future time.

5. DEFINITIONS

Certain terms used in the present discussion should at this point be mentioned to assure that the reader is of the same mind as the author as to their respective meanings. Thus the following definitions are provided to clarify the scope of the present invention, and to enable its formulation and use.

5.1 The term "ionophore" includes molecules capable of forming a complex with a particular ion, in some instances to the substantial exclusion of others. For example the cyclic polypeptide, valinomycin, binds selectively to potassium ions in solution to form a cationic complex. Also included in the term are coronands, cryptands and podands.

5.2 A "reporter substance" is one which is capable of interacting with an ionophore/ion complex to produce a color change or other detectable response. Thus, the reporter can be an ionic dye such that when the dye is in its ionized state it is a counterion, i.e., opposite in charge, to the ion to be analyzed. Some examples of these are Erythrosin B, 7-amino-4-trifluoromethyl coumarin and 2,6-dichloroindophenol sodium salt. The reporter also includes phenolic compounds, such as p-nitrophenol, which are relatively colorless in the non-ionized state, but which color upon ionization. The reporter substance can also be one which can trigger a detectable response together with other components. For example, the iodide ion can produce a detectable response by interacting with the ionophore/ion complex in the presence of starch and an oxidizing agent.

5.3 By "interacting" is meant any coaction between a reporter substance and an ionophore/ion complex which leads to a detectable response. An example of the reporter substance interacting with the complex is in the case where the reporter is changed by the complex from a colorless to a colored state, such as in the case of p-nitrophenol.

5.4 The term "detectable response" is meant herein as a change in or occurrence of a parameter in a test means system which is capable of being perceived, either by direct observation or instrumentally, and which is a function of the presence of a specific ion in an aqueous test sample. Some detectable responses are the change in or appearance of color, fluorescence, reflectance, pH, chemiluminescence and infrared spectra.

5.5 By the term "intermediate alkyl" as used herein is meant an alkyl group having from 4 to 12 carbon atoms. It includes normal and branched isomers. It may be unsubstituted or it may be substituted, provided any such substitution not interfere with the operation of the presently claimed test means or device in its capability to detect ions.

5.6 The term "lower alkyl", as used in the present disclosure is meant as an alkyl moiety containing 1—4 carbon atoms. Included in the meaning of lower alkyl are methyl, ethyl, *n*-propyl, isopropyl, *n*-butyl, *sec*-butyl and *tert*-butyl. These may be unsubstituted, or they may be substituted provided any such substituents not interfere with the operation or functioning of the presently claimed test means or device in its capability to detect ions.

5.7 By "pseudohalogen" is meant atoms or groups of atoms which, when attached to an unsaturated or aromatic ring system, affect the electrophilicity or nucleophilicity of the ring system, and/or have an ability to influence the distribution of an electrical charge through delocalization or resonance, in a fashion similar to the halogens. Thus, whereas halogen signifies Group VII atoms such as F, Cl, Br and I, pseudohalogens embrace such moieties as CN, —SCN, —OCN, $—N_3$, —COR, —COOR, —CONHR, $—CF_3$, $—CCl_3$, $—NO_2$, $—SO_2CF_3$, $—SO_2CH_3$, and $—SO_2C_6H_4CH_3$, in which R is alkyl or aryl.

5.8 The term "globule" as used herein refers to the kind of spherical or quasi-spherical globes, or balls or other shaped articles of a substance such as form in biphasic suspensions or emulsions. Thus, when an oil-in-water suspension or emulsion is formed, the oil (hydrophobic) phase exists as spherical entities surrounded by a more or less continuous aqueous phase. The more energy supplied in forming the suspension, the smaller the size of the globules. Likewise, the globular size can be controlled by additives such as detergents and other emulsifying agents.

Also included in the meaning of the term "globule" are finely divided particles of a solid material. Thus where the hydrophobic vehicle is a nonporous, nonpolar material such as a polymer, it can be ground or otherwise finely divided into solid particles.

5.9 By "hydrophilic" is meant that characteristic of a substance to have a strong or pronounced tendency to bind or absorb water. Included by the term are those materials which undergo swelling or formation of reversible gels with water, or which are wettable or permeable by water, or which form aqueous solutions.

6. THE TEST MEANS

The present test means comprises four basic elements: a hydrophilic carrier matrix; finely divided globules of a hydrophobic vehicle; an ionophore incorporated with the globules; and a reporter substance also contained in the globules. When an aqueous test sample contains an ion capable of complexing with the ionophore, the ion can enter the hydrophobic globules and interact with the reporter substance, thereby producing a detectable response.

6.1 The Carrier Matrix

In order for the test means to provide a detectable response to a specific ion, it is necessary that the aqueous test sample have substantially unimpeded accessability to the outer surface of the hydrophobic globules. Thus, the carrier matrix with which the globules are incorporated must be easily wettable by aqueous systems, i.e., hydrophilic.

Typical of some materials which display suitable hydrophilicity are gelatin, agarose, poly(vinyl alcohol), poly(propyleneimine), carrageenan, and alginic acid. These are water-soluble polymers which, in their dry state, exhibit a marked wetability by aqueous media.

Other, insoluble polymeric materials suitable for use include porous substances, such as paper and other cellulosic systems, sintered ceramic frits and similar porous, hydrophilic matrices, provided the integrity of the globules can be maintained. Thus, for example, a suitable carrier matrix is a combination of paper and gelatin. In this instance a filter paper pad can be impregnated with a stable emulsion of aqueous gelatin and the hydrophobic globules. Upon drying, the filter paper/gelatin carrier matrix is capable of preserving the integrity of the globules until the test means is put to its intended use.

6.2 The Hydrophobic Vehicle

The primary function of the hydrophobic vehicle of the invention is to isolate the ionophore and reporter substance from the aqueous test sample. Thus the vehicle can be a liquid or solid substance, so long as it possesses sufficient hydrophobicity to achieve the above isolation of reagents from the test sample. Moreover, the vehicle must preclude substantial ionic penetration of the globule unless the ion is

one capable of complexing with the ionophore.

Substances which are useful as hydrophobic vehicles include liquids which are simultaneously unsoluble in water and capable of dissolving an ionophore and a reporter substance in sufficient concentration to provide a substantial response when in use. They must be relatively nonvolatile, i.e., having a boiling of at least about 150°C. Typical liquids which fall into this category are tricresylphosphate, 2-nitrophenyloctyl ether, 2-nitrophenylbutyl ether, dioctylphthalate, *tris*-2-ethylhexylphosphate, di-2-ethylhexyl sebacate, and *n*-butyl acetyl ricinolate.

In addition to oils, and other liquid vehicles, it is likewise feasible to utilize finely divided particles (globules) of solid materials to contain and isolate the ionophore and reporter substance. Thus the vehicle can comprise hydrophobic materials such as organic polymers which are substantially nonporous and nonpolar. These include polyvinyl fluoride, polyvinyl chloride, vinyl chloride/vinyl acetate copolymer, vinyl chloride/vinylidene chloride copolymer, vinyl chloride/vinyl acetate/vinyl alcohol terpolymer, vinylidene chloride/acrylonitrile copolymer, and polyurethane. Of course, many other polymeric materials would be suitable for use as the hydrophobic vehicle, and the identification of such materials is well within the skill of the art, given the present disclosure.

6.3 Ionophores

The ionophore element of the present invention is indeed a concept which is broad in scope, as characterized by the definition of the term in paragraph 5.1, *supra*. It includes multidentate cyclic compounds which contain donor atoms in their cyclic chains. Such multidentate cyclic compounds can be monocyclic or polycyclic. Alternatively, the ionophore can be an open chain containing donor atoms. Thus, included in the ionophore element are monocyclic systems which are ion-specific, termed coronands; polycyclic ion-specific compounds known as cryptands; and open chain structures, which are known as podands, capable of selectively complexing with ions.

6.3.1 Coronands

The coronands are monocyclic compounds which contain donor atoms whcih are electron rich or deficient and which are capable of complexing with particular cations and anions because of their unique structures. Included in this term are the crown ethers in which the monocyclic chain contains oxygen as the donor atoms. Other coronands are compounds which contain an assortment of electron rich atoms such as oxygen, sulfur and nitrogen. Because of the unique sizes and geometries of particular coronands, they are adaptable to complexing with various ions. In so complexing, the electron rich atoms, such as the oxygens in a crown ether, orient towards the electron deficient cation. The carbon atom segments of the chain are simultaneously projected in a direction outwards from the ion. Thus, the resultant ion/coronand complex is charged in the center, but is hydrophobic at its perimeter.

6.3.2 Cryptands

The cryptands are the polycyclic analogues of the coronands. Accordingly, they include bicyclic and tricyclic multidentate compounds. In the cryptands, the cyclic arrangement of donor atoms is three dimensional in space, as opposed to the substantially planar configuration of the coronand. A cryptand is capable of virtually enveloping the ion in three dimensional fashion and, hence, is capable of strong bonds to the ion in forming the complex. Like in the coronands, the donor atoms can include such atoms as oxygen, nitrogen and sulfur.

6.3.3 Podands

Ions can also form complexes with noncyclic compounds. For example, a linear chain which contains a regular sequence of electron rich atoms such as oxygen has the capability of associating with positively charged ions to form complexes, not entirely unlike the coronands and cryptands. The main structural difference between podands and the other two ionophores is the openness of the structure. Thus, podands can be subcategorized into monopodands, dipodands, tripodands, etc. A monopodand, therefore, is a single organic chain containing donor atoms, a dipodand is two such chains coupled by a bridge atom or group of atoms capable of variable spacial orientation, and a tripodand is three chains attached to a central atom or group of atoms.

6.3.4 Specific Ionophores

Some of the ionophores which have been found to be especially useful with the instant invention are tabulated herein along with the cations with which they are capable of selectively complexing.

| Ionophore | Cation |
|---|---|
| Valinomycin | $K^+$ |
| 4,7,13,16,21-Pentaoxa-1,10-diazabicyclo[8,8,5]tricosane (Kryptofix 221) | $Na^+$ |
| 4,7,13,16,21,24-Hexaoxa-1,10-diazabicyclo[8,8,8]hexacosane (Kryptofix 222) | $K^+$ |
| 4,7,13,18-Tetraoxa-1,10-diazabicyclo[8,5,5]eicosane (Kryptofix ® 211) | $Li^+$ |
| 12-Crown-4 | $Li^+$ |
| 16-Crown-5 | $Na^+$, $K^+$ |
| 18-Crown-6 | $K^+$ |
| Dibenzo-18-crown-6 | $K^+$ |
| Dicyclohexano-18-crown-6 | $K^+$ |

Kryptofix is a registered trademark of E. Merck, Darmstast, Germany.

6.4 The Reporter Substance

Given the presence of the ion of interest in the test solution, it is the reporter substance which provides the detectable response by interacting with the ionophore/ion complex. The reporter substance can range in composition from a single compound, such as a chromogenic counterionizable compound, to a mixture of reactive species which produce a detectable product when their reaction chain is triggered by the presence of the complex. Thus, it can be seen that when no analyte ion is present the reporter substance remains dormant; no detectable response is observed. Alternatively, when the particular ion under surveillance is present the complex interacts with the reporter substance and induces it to undergo a detectable change.

In the case where the reporter is a single compound, it can include a dissociable compound, such that upon dissociation a colored ionic species is formed. An ionic reporter typically is chosen such that the colored ion is opposite in charge to the analyte. Also useful is a dissociable compound in which the counterion to the analyte is fluorescent. Examples of such chromophoric and fluorophoric reporter substances are dichlorophenolindophenol, fluorescein and its derivatives, 8-anilino-1-naphthalenesulfonic acid, 7-amino-4-trifluoromethyl coumarin, Erythrosin B, Orange IV, Phloxine B, and Eosin Y. Structures of Erythrosin B, Phloxine B and Eosin Y are given in "Aldrich Handbook of Fine Chemicals", Aldrich Chemical Company, Milwaukee (1983). The structure of Orange IV can be found in "The Merck Index", 9th ed., Merck & Co., Inc. Rahway (1976).

Where the reporter substance comprises a mixture of reactive species, great latitude is possible in selecting an appropriate combination of ingredients. For example, one system could be iodide ion, starch and an oxidizing agent. Such a system could be utilized in a test means in which the hydrophobic vehicle contains (in addition to ionophore) starch and the oxidizer. Iodide could then be added to the test sample. In the presence of an analyte ion, formation of the ion/ionophore complex would induce iodide to associate with the matrix, whereupon it would be converted to free iodine, thus indicating a positive test.

Yet another example of a reaction sequence useful as the reporter substance is one which involves the dissociation of a proton from a phenol, thus initiating a coupling reaction to form a colored product. The so-called Gibbs Reaction is typical of such a reaction sequence, in which a 2,5-cyclohexadiene-1-one-2,6-dihalo-4-haloimine (I) couples with a phenol (II) to form a colored reaction product (III).

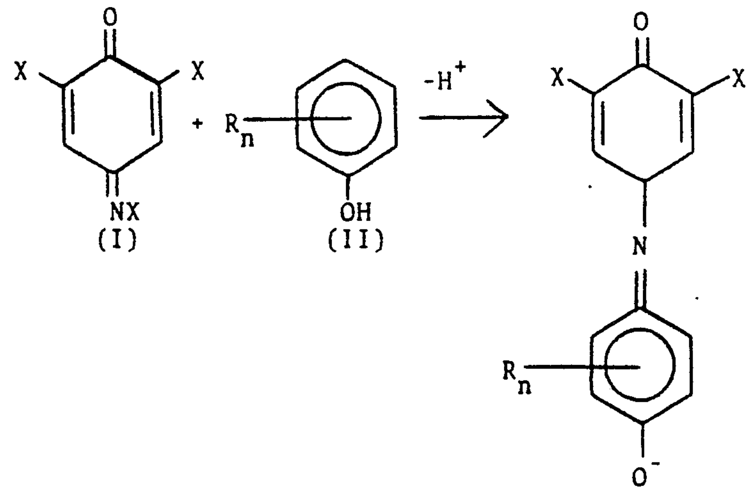


(I) (II) (III)

In this reaction sequence R can be any 2,3,5 and/or 6-position substituent which will not hinder the overall reaction sequence. Thus R is lower or intermediate alkyl or aryl, or R can form a fused ring system at either the 2,3- or 5,6-positions. X is a halogen or pseudohalogen, and n is 0—4. This kind of reporter substance is utilized by incorporating compounds having the structures (I) and (II) with the hydrophobic vehicle.

Still another utilization of the Gibbs chemistry involves compounds having a structure such as (III) in its nonionized form. The formation of the ion/ionophore complex results in an interaction such that reporter substance (III) yields observable color in and of itself. This phenomenon can be thought of as proceeding in accordance with the following reaction sequence and resonance structures

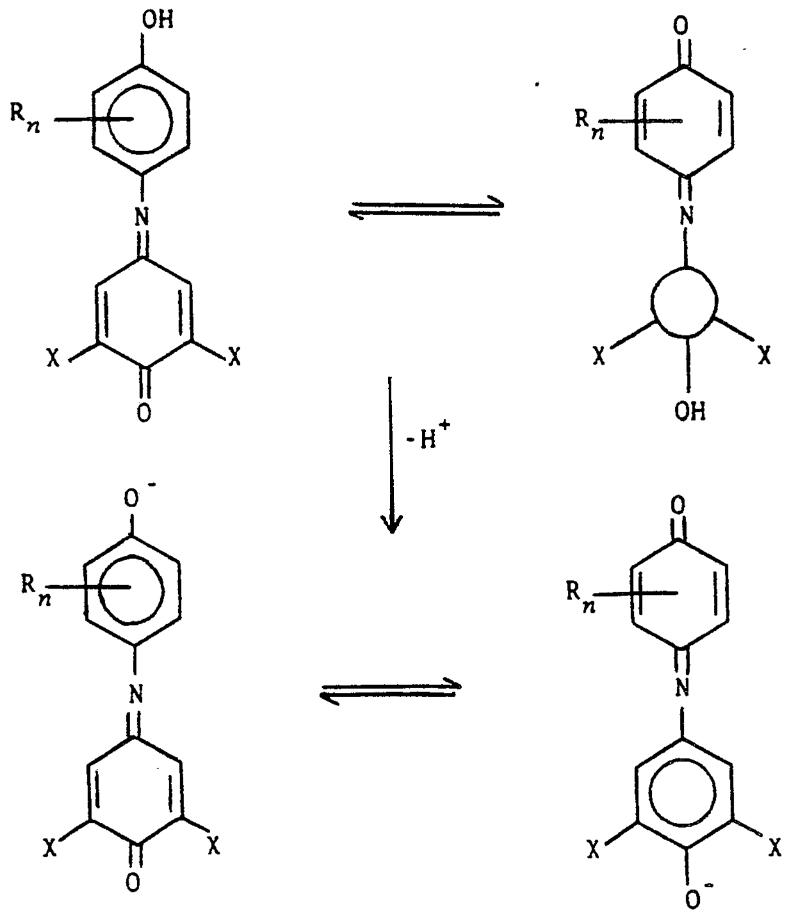


in which R, same or different, is lower or intermediate alkyl, i.e. an alkyl having 1 to 12 carbon atoms, aryl, or a fused ring system at the 2,3- or 5,6-positions, and n is 0—4. Especially preferred is a compound having the structure

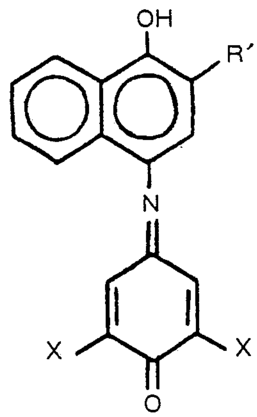

in which R′ is H or lower alkyl i.e. an alkyl having 1 to 4 carbon atoms. The case in which R′ is methyl has been found especially suitable to the present invention.

Yet another preferred reporter substance is a compound having the structure

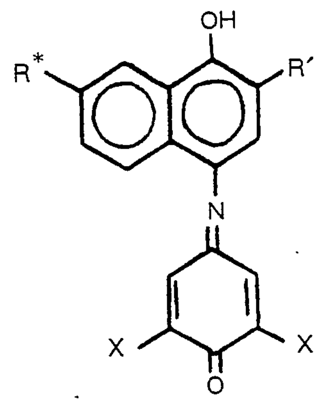

in which R* is intermediate alkyl, i.e., a group having 4—12 carbon atoms, and in which R′ is as defined above. Compounds such as these have been found to be especially resistant to possible interference due to the presence of serum albumin in the test sample. Preferred among these types of reporter substances is that in which R* is *n*-decyl and R′ is methyl.

7. THE TEST DEVICE

The test means described above can be mounted at one end of an elongated support member, the other end of the support serving as a handle. Such a test device can be held at the handle end, while the other end bearing the test means is contacted with the test sample.

Useful materials for the support members include films of a myriad of plastics or polymers. Examples include such polymeric materials as cellulose acetate, polyethylene terephthalate, polycarbonates and polystyrene. The support can be opaque or it can transmit light or other energy. Preferred supports include transparent materials capable of transmitting electromagnetic radiation of a wavelength in the range of about 200 nanometers (nm) to 900 nm. The support need not, of course, transmit over the entire 200—900 nm region, although for fluorometric detection of analytical results it is desirable that the support be transparent over a band wider than, or at least equal to the absorption and emission spectra of the fluorescent materials used for detection. It may also be desirable to have a support that transmits one or more narrow wavelength bands and is opaque to adjacent wavelength bands. This could be accomplished, for example, by impregnating or coating the support with one or more colorants having suitable absorption characteristics.

To prepare a test device of the present invention, a small rectangle of the test means, i.e., a hydrophilic carrier matrix incorporated with globules of a hydrophobic vehicle containing an ionophore, a reporter substance, and possibly other ingredients, is affixed to an elongated support member having an upper substantially flat face, such as an oblong piece of polystyrene film. The test means piece is affixed to the flat face at one end, leaving the other end of the polystyrene to serve as a convenient handle.

The test means can be affixed by any means compatible with the intended use. One method is to use a double faced adhesive tape between the test means square and the support member. One such tape is known as Double Stick®, available from 3M Company. Another way to affix the test means is to cast a film of an emulsion of an aqueous polymer phase (i.e., a hydrophilic carrier matrix) and a hydrophobic vehicle containing the ionophore and reporter substance directly onto the support, followed by a drying step.

8. USE OF THE INVENTION

The test means and device of the present invention can be adapted for use in carrying out a wide variety of chemical analyses, not only in the field of clinical chemistry, but in chemical research and chemical process control laboratories. They are well suited for use in clinical testing of body fluids, such as blood, blood serum and urine, since in this work a large number of repetitive tests are frequently conducted, and test results are often needed a very short time after the sample is taken. In the field of blood analysis, for example, the invention can be adapted for use in carrying out quantitative analysis for many of the ionic blood components of clinical interest.

The test means (and test device) is used by contacting it with the test sample for a sufficient period of time (such as several minutes). After that the excess sample can be removed, such as by washing in a gentle stream of water with subsequent blotting with tissue paper, or by merely wiping it off. Alternatively, it may be unnecessary to remove the sample.

If the ion under analysis is present in the test sample, the complex of ionophore and ion will interact with the reporter substance, and a detectable response will appear. Where the reporter substance is a dissociable substance producing a colored counterion of the analyte, an observable color will form in the carrier matrix test means. Where the reporter substance is a fluorophore such as fluorescein, a fluorescence spectrophotometer can be utilized to measure the detectable response formed in the test means (here, the appearance of or change in fluorescence). Other techniques useful in observing a detectable response include reflectance spectrophotometry, absorption spectrophotometry and light transmission measurements.

When the test sample is blood serum, transmission techniques can be used to detect and quantify the presence of any reaction product, the formation of which serves as the detectable response. In this case radiant energy such as ultraviolet, visible or infrared radiation, is directed onto one surface of the test means and the output of that energy from the opposite surface is measured. Generally, electromagnetic radiation in the range of from about 200 to about 900 nm has been found useful for such measurements, although any radiation permeating the test means and which is capable of signifying the occurrence or extent of the response can be used.

Various calibration techniques are applicable as a control for the analysis. For example, a sample of analyte standard solution can be applied to a separate test means as a comparison or to permit the use of differential measurements in the analysis.

9. EXAMPLES

The following Examples are provided to further assist the reader in making and using the present invention. Thus, preferred embodiments are described in experimental detail and the results analyzed. The Examples are meant to be illustrative only, and are in no way intended as limiting the scope of the invention described and claimed herein.

9.1 Preparation of 7-(n-Decyl)-2-methyl-4-(3′,5′-dichlorophen-4′-one)indonaphthol

The captioned compound (hereafter 7-decyl-MEDPIN) was prepared for use as a reporter substance in the present test means and test device. The reaction pathway is depicted in the following sequence, in which R* is *n*-decyl.

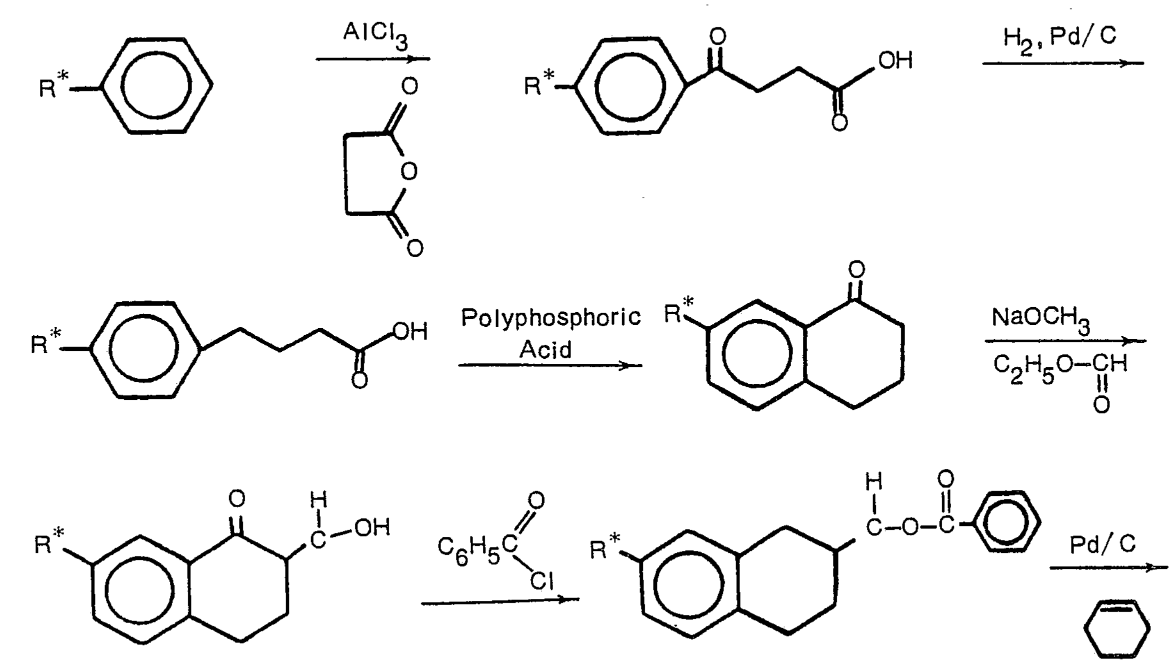

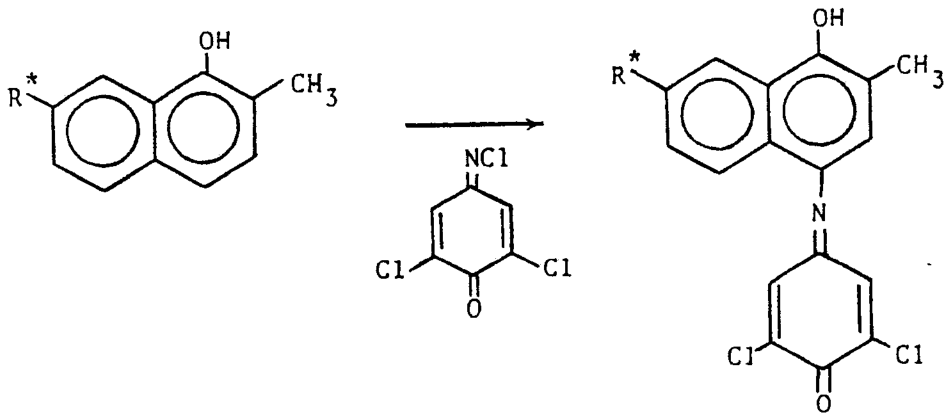

**Description**

Preparation of β-(p-n-Decylbenzoyl)-propionis Acid

A mixture of 26.2 grams (g) phenyl decane (1.2 mole), 120 g succinic anhydride (1.2 mole) and 360 milliliters (ml) nitroethane in a 5 liter (l) three-necked flask equipped with HCl outlet and mechanical stirrer was cooled to 0°C in an ice-bath. To this mixture 360 g $AlCl_3$ (2.7 moles) was added slowly over 1/2 hour with stirring. Evolution of HCl was observed when about half of the $AlCl_3$ was added. After the addition, the ice bath was removed, and the reaction mixture was allowed to stand at room temperature (RT) for 5 minutes. The mixture was then heated over a steam bath. The heating and stirring was continued until the vigorous evolution of HCl ceased (about 30 minutes). The reaction was cooled in an ice bath while 2 l of ice water was added followed by 600 ml of concentrated HCl. This was stirred at RT for 2 hours until all the dark brown solid was hydrolyzed. The insoluble product was recovered by filtration. The solid was then recrystallized twice with acetic acid (250 ml each time) to give about 320 g (85% yield) of product (dried in vacuum over KOH).

TLC: Rf 0.43 in 1:1 (v/v) EtOAc:toluene (silica gel plate).

Analysis: Calculated for $C_{20}H_{30}O_3$: C, 75.42; H, 9.50.
Found: C, 76.02; H, 9.89.

Preparation of 4-(p-n-decyl-phenyl)-butyric acid

Twenty grams of Pd/C (palladium-saturated carbon obtained from Aldrich Chemical Co., catalogue No. 20, 569—9) and β-(p-n-decyl-benzoyl)-propionic acid (150 g 0.47 moles) were mixed with acetic acid (350 ml) in a 1 l Paar bomb. The reaction was started at 50 psi $H_2$ pressure and 50°C. A sudden increase in temperature accompanied by a drop in $H_2$ volume was observed. Thin layer chromatography of the reaction mixture indicated complete reaction. The catalyst was removed by glass fiber filtration while hot. The filtrate was allowed to crystallize at RT. The crystalline product was recovered by filtration. A second crop of product which formed after the filtrate was chilled was also recovered. The total yield was 100 g (68%) after drying under a vacuum over KOH. Melting point: 67—69°C.

TLC: Rf 0.68 in 1:1 (v/v) EtOAc:toluene (silica gel plate)

Analysis: Calculated for $C_{20}H_{32}O_2$: C, 78.90; H, 10.50.
Found: C, 78.39; H, 10.70.

Preparation of 7-n-Decyl-1-tetralone

A mixture of p-decyl-phenyl butyric acid (30 g, 98.7 mmoles) and polyphosphoric acid (150 g) was heated in an oil bath until all solid was melted. The heating was elevated to 150°C (internal temp.) and the mixture was stirred vigorously for 30 minutes. The reaction was then cooled to RT and treated with 300 ml ice water and 150 ml ethyl ether. After the mixture was stirred for 30 minutes at RT, the aqueous layer was separated and washed twice with 150 ml ethyl ether. The combined organic phases were washed with 150 ml saturated aqueous NaCl. Ether was removed by evaporation and the residue was distilled on a Kügelrohr distillation apparatus (Aldrich Chemical Co.). The product has a boiling point of 190°—200°C/0.1 mm Hg. The yield was 11 g (39%) of pale yellow oil.

TLC: Rf 0.34 in toluene (silica gel plates).

Analysis: Calculated for $C_{20}H_{30}O$: C, 83.90; H, 10.70.
Found: C, 85.63; H, 10.83.

Preparation of 2-Hydroxymethylene-7-n-decyl-1-tetralone

A mixture of sodium methoxide (5.4 g 40.5 mmoles), ethyl formate (7.4 g, 100 mmoles) and 100 ml dry toluene was cooled in an ice bath under inert atmosphere ($N_2$ or Argon). A solution of the 7-decyl-1-tetralone (11.5 g, 40 mmoles) in 100 ml dry toluene was added with rapid stirring. The ice bath was removed and the reaction was stirred at RT for 4 hours. The reaction mixture was treated with 100 ml water and 100 ml 6N HCl. The organic layer was separated and washed twice with 50 ml saturated NaCl, dried

over anhydrous $Na_2SO_4$, filtered and evaporated to remove all the toluene. The oily residue was used for the next reaction without further purification.

TLC: Rf 0.56 in toluene (silica gel plates), the spot turned dark-brown after spray with 5% $FeCl_3$ solution.

Preparation of 2-Benzoyloxymethylene-7-n-decyl-1-tetralone

The oily residue from the previous reaction step was mixed with dry pyridine (120 ml). The solution was stirred under nitrogen at 0°C (ice bath). The solution was treated with 30 ml of benzoyl chloride. After the addition of the benzyl chloride, insoluble pyridinium chloride was observed in the mixture. The reaction was stirred at RT for two hours. The product was poured into ice water (400 ml) with vigorous stirring. The light cream color solid was recovered by filtration, and washed well with cold water. The slightly wet solid was recrystallized from hot absolute ethanol (120 ml). White solid (14 g, 87% yield based on the 7-decyl-1-tetralone) was recovered. The melting point was 64—66°C.

TLC: Rf 0.40 in toluene (silica gel plates).

| | | |
|---|---|---|
| Analysis: Calculated for $C_{28}H_{34}O_3$: | C, 80.34; | H, 8.19. |
| Found: | C, 80.05; | H, 8.27. |

Preparation of 7-n-decyl-2-methyl-1-naphthol

To a mixture of 2-benzoyloxymethylene-7-n-decyl-l-tertralone (14 g, 33.5 mmoles) and Pd/C (3.5 g) under inert atmosphere was added cyclohexene (175 ml). The mixture was heated to reflux while maintaining the inert atmosphere. The conversion of starting material to product was determined by TLC after 3 hours. After all the starting material reacted, the mixture was cooled down to RT. The catalyst was removed by filtration and washed twice with 50 ml hot toluene. The combined filtrate was evaporated to a small volume. The product was purified with a Prep-500 silica gel column (a high pressure silica gel preparative column, obtained from Waters Association, Milford, MA). Toluene was used as the mobile phase. The product fractions were pooled and evaporated to dryness under vacuum overnight. Cream white solid (9.0 g; 90% yield) was recovered. The melting point was 65—67°C.

TLC: Rf 0.65 in toluene (silica gel plates). Pink color developed when the product spot was irradiated with short UV light.

| | | |
|---|---|---|
| Analysis: Calculated for $C_{21}H_{30}O$: | C, 84.51; | H, 10.13. |
| Found: | C, 84.49; | H, 10.72. |

Preparation of 7-(n-Decyl)-2-methyl-4-(3',5'-dichlorophen-4'-one)-indonaphthol

7-Decyl-2-methyl-1-naphthol (4.5 g, 15.1 mmoles) and 2,6-dichloroquinone-4-chloroimide (3.0 g, 14.3 mmoles) were dissolved in acetone (150 ml). The solution was treated with 700 ml potassium carbonate solution (0.1 M, pH = 10.0). The solution was stirred vigorously at RT for 10 min. The pH of the reaction mixture was adjusted to 2.8 with HCl (1.0 N). The mixture was stirred for 15 minutes. The red solid was recovered by filtration and washed well with water. The solid was dissolved in toluene and filtered with glass fiber paper to remove any insoluble materials. The filtrate was concentrated and purified with a Prep-500 silica gel column, toluene as the mobile phase. Product fractions were pooled and evaporated to dryness. The residue was crystallized with n-hexane (100 ml) to give product (3.9 g, 58% yield).

TLC: Rf 0.26 in toluene (silica gel plates). The brown color spot turned purple-blue after being treated with 0.1 N NaOH on the plates.

| | | | |
|---|---|---|---|
| Analysis: Calculated for $C_{27}H_{31}NO_2Cl_2$: | C, 68.64; | H, 6.57; | N, 2.97. |
| Found: | C, 68.88; | H, 6.85; | N, 2.97. |

9.2 Gelatin as a Hydrophilic Carrier Matrix

A series of experiments was conducted to prepare and evaluate the test means and device of the present invention wherein gelatin was employed as the hydrophilic carrier matrix.

9.2.1 A solution of a hydrophobic vehicle containing an ionophore and a reporter substance was prepared by adding 68 milligrams (mg) of valinomycin obtained from Sigma Chemical Co. and 29 mg of 7-n-decyl-MEDPIN to 4.27 grams (g) of o-nitrophenyloctyl ether with warming until solution was achieved. A buffered gelatin solution was prepared using 3.13 g Type I gelatin (Sigma Chemical Co.) which had been dialyzed at 10°C to remove ionic impurities, and 20.8 g of deionized water. To this was added 0.25 ml of a buffer prepared by adjusting 1 M Trizma base (Sigma Chemical Co.) to pH 8 with HCl (Baker) and then to pH 5 with acetic acid (Baker).

The oil and gelatin solutions were mixed and placed in a 12—37 ml mini sample container for a Waring Blender (Fisher Scientific) and blended for 2 minutes at high speed.

After allowing 15—30 minutes at 45°C for bubbles to rise, the emulsion was spread onto a polyester film support which had been pretreated to accept gelatin (40 GAB 2S, 3M Co.) to a thickness of 0,172 mm ($6.75 \times 10^{-3}$ inches), (# 75 Meyer Rod. RDS Co., Webster N.Y.) The film was air dried, then $5{,}08 \times 10.16$ mm ($0.2 \times 0.4$ inch) pieces were mounted onto polystyrene film supports handle using double-faced adhesive tape (Double Stick, 3M Co.) to form tests devices.

Test samples were prepared containing 0, 0.2, 0.6, 0.6, 0.8 and 1.1 mM KCl, 100 mM tris-Cl pH 8.5.

These concentrations correspond to those found in plasma diluted ninefold. A 30 µl (microliter) sample drop was placed on the reagent portion of a test device and incubated at 37°C in a Seralyzer® (Ames Division, Miles Laboratories, Inc.) reflectance spectrophotometer for 2.5 minutes, at which time the reflectance at 640 nm (nanometers) was measured. The reflectance data is tabulated below.

| $K^+$ (mM) | $(K/S)^2$ |
|---|---|
| 0 | 0.1140 |
| 0.2 | 1.2839 |
| 0.4 | 2.2822 |
| 0.6 | 3.3909 |
| 0.8 | 4.6256 |
| 1.1 | 5.9271 |

$(K/S)^2$ is defined as

$$(K/S)^2 = \frac{(1-R)^4}{4R^2}$$

in which R is the fraction of reflectance from the test device, K is a constant, and S is the light scattering coefficient of the particular reflecting medium. The above equation is a simplified form of the well-known Kubelka-Munk equation (See Gustav Kortüm, "Reflectance Spectroscopy", pp. 106—111, Springer Verlag, New York (1969).

The above data is plotted in Figure I, and shows that potassium concentration corresponds linearly to $(K/S)^2$. Moreover, the data shows that various concentrations can be accurately measured.

9.2.2 The experiment of example 9.2.1 was repeated using 2-methyl-4-(3',5'-dichlorophen-4'-one) indonaphthol (MEDPIN) instead of the n-decyl substituted molecule as the reporter substance. Accordingly, a solution was prepared containing 6.7 mg/ml valinomycin and 1.67 mg/ml MEDPIN in o-nitrophenyloctyl ether. An aqueous gelatin emulsion was prepared as in example 9.2.1 such that the emulsion contained 12% of ether solution and 7% gelatin. A film of the emulsion having a wet thickness of 0.20 inches was cast with a doctor blade onto a polyester support, dried, and mounted on strips of polystyrene film.

Samples of KCl were prepared and the test devices evaluated as in example 9.2.1. The reflectance data tabulated below is shown graphically in Figure II.

| $K^+$ (mM) | $(K/S)^2$ |
|---|---|
| 0 | 0.2048 |
| 0.2 | 1.4945 |
| 0.6 | 5.3038 |
| 1.1 | 8.4158 |

The data and its plot show a linear correlation between $K^+$ concentration and $(K/S)^2$.

9.2.3 The experiment of example 9.2.1 was repeated except that 3-(n-pentalkyl)-3',5'-dichlorophen-4'-one-indophenol (DIP) was used as the reporter substance instead of 7-n-decyl-MEDPIN.

DIP was prepared from 3-n-pentadecylphenol and 2,6-dichloroquinone-4-chloroimide (DQCl). Equimolar amounts of these compounds were combined in acetone to achieve a theoretical concentration of about 100 mM of each. To each ml of solution was added 6 ml buffer (pH = 10). The buffer was 100 mM 3-(cyclohexlamino)-propanesulfonic acid in water. The resultant solution was adjusted to pH 2.6 with 1N HCl. The mixture was centrifuged and the precipitate dried under nitrogen atmosphere.

An aqueous gelatin emulsion was prepared as in 9.2.1, above, but containing 9.66% by weight gelatin and 12.6% by weight NPOE. Dissolved in the oil were valinomycin (15 mM) and DIP (25 mM).

The data from evaluating the test device is tabulated below, and is portrayed graphically in Figure III.

| $K^+$ (mM) | $(K/S)^2$ |
|---|---|
| 0 | 0.8409 |
| 0.2 | 1.0858 |
| 0.6 | 1.5302 |
| 1.1 | 2.0794 |

The data and its plot shown in linear correlation between $K^+$ concentration and $(K/S)^2$.

9.3 Agarose as the Hydrophilic Carrier Matrix

A series of experiments was conducted in which the test means and device of the present invention were prepared using agarose as the hydrophilic carrier matrix.

9.3.1 A test device was prepared in which the hydrophilic carrier matrix was agarose and the hydrophobic vehicle was 2-nitrophenyloctyl ether (NPOE).

A solution was prepared by dissolving 18.6 g valinomycin and 10.4 mg 7-n-decyl-MEDPIN in 1.52 ml NPOE with warming until dissolution occurred. A second solution was prepared containing 1.2 g Agarose in 40 ml distilled water at 60°C. To this solution was added 760 µl (microliters) of 1 mg/ml aqueous solution of Zwittergent 3-10 obtained from Calbiochem-Behring Corp. of LaJolla, CA. Zwittergent is a commercial name for N-decyl-N,N-dimethyl-3-ammonio-1-propanesulfonic acid.

These solutions were emulsified in a 12 to 37 ml capacity cup on a Waring Blender at the high speed setting. The resultant emulsion was poured into a 50 ml beaker and placed under a vaccum for 15 seconds to remove entrapped air. Next, the emulsion was cast into a 1.27 mm (0.050 inch) (wet thickness) film on Bruning Drafting film using a doctor blade. Following drying at room temperature for 16 hours, the dried emulsion was slit into 5,08 × 10,16 mm (0.2 by 0.4 inch) rectangles and mounted on polystyrene film strip as in example 9.2.1.

For evaluating the test device, aqueous solutions of KCl at various concentrations were prepared. These solutions were buffered at pH 8.5 with Tris·HCl buffer. These solutions were assayed as in the previous examples with the SERALYZER reflectance photometer, and the $(K/S)^2$ values are recorded in the following table.

| $K^+$ (mM) | $(K/S)^2$ |
|---|---|
| 0 | 0.0696 |
| 0.05 | 0.5313 |
| 0.10 | 0.7026 |
| 0.15 | 1.0242 |
| 0.20 | 1.4149 |

The data is plotted graphically in Figure IV which shows a linear correlation between potassium concentration and $(K/S)^2$. This relationship enables reflectance measurement differentiation between various concentration levels of $K^+$.

9.3.2 Valinomycin (12.8 mg) and 7-n-decyl-MEDPIN (5.4 mg) were dissolved in 760 µl of 2-nitrophenylbutyl ether with warming. A second solution was prepared by adding 600 mg low gelling temperature agarose (Marine Colloids Division of FMC Corp.) to 20 ml distilled water. To this aqueous mixture was added 38 µl of a 10 mg/ml aqueous solution of Zwittergent 3—16 (N-hexadecyl-N,N-dimethyl-3-ammonio-1-propanesulfonic acid obtained from Calbiochem-Behring). The agarose and 2-nitrophenylbutyl ether solutions were then emulsified in a 12—37 ml cup on a Waring Laboratory blender for 5 minutes at a high speed setting. Following blending the emulsion was allowed to stand for 5 minutes to permit evolution of entrapped air bubbles.

The emulsion was cast onto Gel Bond polyester film (Marine Colloids Division of FMC Corp.) using a 0,636 mm (0.025 inch) doctor blade. Following air drying for one hour at room temperature, the film was placed in a 40°C air oven for 15 minutes. The film was then cut into 5,08 × 10,16 mm (0.2 × 0.4 inch) rectangles which were mounted on polystyrene film as in example 9.2.1. and evaluated.

Reflectance data was collected at 640 nm (nanometers) using a SERALYZER reflectance photometer, and the data was converted to $(K/S)^2$ values. The results are tabulated below, and are plotted graphically in Figure V. They show a linear correlation between potassium ion concentration and $(K/S)^2$, which enables accurate assay of concentration.

| $K^+$ (mM) | $(K/S)^2$ |
|---|---|
| 0 | 0.0915 |
| 0.10 | 1.133 |
| 0.15 | 1.750 |
| 0.20 | 2.189 |

9.3.3 Valinomycin (12.8 mg) and 7-n-decyl-MEDPIN (5.4 mg) were dissolved in 760 µl of diethyl phthalate with heating. A second solution was prepared by adding 600 mg agarose and 38 µl of a 10 mg/ml solution of Zwittergent 3—16 in water to 20 ml distilled water at 60°C. The two solutions were combined and emulsified. The resultant emulsion was placed under vaccuum for 15 seconds to remove entrapped air bubbles.

A film of emulsion having a wet thickness of 1.27 mm (0.05 inches) was cast onto a Gel Bond film using a doctor blade. The film was allowed to stand for 2 hours at room temperature, then further dried in an air oven at 40°C for an additional 30 minutes. Test devices were then prepared as in the above examples.

The test devices were evaluated using aqeuous KCl solutions containing a buffer of 3-(cyclohexylamino)-propanesulfonic acid and LiOH (pH = 10). The results are given in the following table.

| K⁺ (mM) | $(K/S)^2$ |
|---|---|
| 0 | 0.0865 |
| 0.5 | 0.3565 |
| 1.0 | 0.7937 |
| 1.5 | 1.2034 |
| 2.0 | 2.0207 |

The data is plotted graphically in Figure VI. The dose/response curve enables easy differentiation between various $K^+$ levels.

9.4 Paper and Hydrophilic Polymer as a Composite Carrier Matrix

Experiments were conducted to further assess ramifications of the hydrophilic carrier matrix. In the following examples, finely divided globules of a hydrophobic vehicle containing ionophore and reporter substance are entrapped in a hydrophilic matrix comprising paper and agarose.

9.4.1 Three stock solutions were prepared. For the first solution 28.4 mg of 7-n-decyl-MEDPIN and 71.6 mg of (2,3-naphtho)-15-crown-5 were added to 2 ml of 2-nitrophenyloctylether, vigorously mixed with a vortex mixer for 5 seconds, and placed for 10 to 20 minutes in a Sybron Thermolyne Dri-Bath heater set at 90°C until all reagents were dissolved. An agarose solution was prepared by dissolving 1 g of agarose in 20 ml of water at 80°C. A zwitterionic detergent solution was prepared by dissolving 50 mg of Zwittergent 3—10 in 20 ml of water.

A reagent emulsion was prepared by combining 0.8 mL of the first solution, 12.0 ml of the agarose solution, 0.8 ml of the detergent solution and 1.4 ml of distilled water and emulsifying the mixture in a 12—37 ml capacity stainless steel cup at high speed for 5 minutes on a Waring Laboratory blender. The orange colored emulsion was allowed to deaerate for 5 minutes at 60°C before application onto Whatman 31 ET paper using a No. 75 Meyer Rod. The paper was then dried in a 60°C oven for 20 minutes. A piece of double-sided acrylic adhesive (Double Stick) was applied to the uncoated side of the paper. The assembly was cut into 10.16 mm (0.4-inch) wide strips which were then affixed to a polystyrene support via the second side of the adhesive film. Additional cutting to 5,08 mm (0.2 inch) strips then gave reagent strips each consisting of a 5,08 × 10.16 mm (0.2″ × 0.4″) reagent pad affixed to a polystyrene handle and suitable for use with the Ames SERALYZER reflectance photometer.

Testing of the strips was done by measuring the diffuse reflectance at 640 nm of the reacted reagent pad using a SERALYZER® instrument. Five aqueous solutions of potassium chloride buffered at pH 9.0 with 100 mM borate buffer were used as samples. At each level of potassium, triplicate strip reactivities were measured and the mean calculated. The results are tabulated below.

| K⁺ (mM) | $(K/S)^2$ |
|---|---|
| 0.08 | 0.1846 |
| 0.12 | 0.2328 |
| 1.16 | 0.3018 |
| 1.20 | 0.3532 |
| 0.24 | 0.4440 |

The results indicate excellent assay results for varying $K^+$ concentrations, as shown by the plot of the above data in Figure VII.

9.5 Use of $TiO_2$ as an Ingredient of the Carrier Matrix

An experiment was conducted in which the test means and device of the present invention were prepared using $TiO_2$ as an additional ingredient in the composite carrier matrix. The results show improved capability in determining ions in a test sample.

An emulsion of o-nitrophenyloctyl ether (NPOE) (12.6% by weight) and gelatin (9.6% by weight) in water was prepared. Prior to emulsification, the NPOE was made 15 mM in 7-decyl-MEDPIN and valinomycin, respectively. After emulsifying the NPOE/-gelatin mixture with a Waring Laboratory Blender at high speed, the resultant emulsion was spread into a polyester film treated to accept gelatin (40 GAB 2S, 3M Co.). The films were spread to a wet thickness of 6.75 mils (#75 Mayer Rod), 15 mils (doctor blade) and 30 mils (doctor blade). The films were dried at RT for about 30 minutes.

A second set of films was prepared as above except that 0.75% by weight of $TiO_2$ powder was included (0.5 μ particle size, NL 2030 available from NL industries). The films were spread on 40 GAB 2S polyester film to wet thickness of 0.0915mm (3.6 mils) (#40 Mayer Rod) 0,172 mm (6.75 mils) (#75 Mayer Rod), 0.385 mm (15 mils) (doctor blade) and 0,761 (mm) (30 mils) (doctor blade).

Small rectangular pieces 5,08 × 10,16 mm (0.2 inch by 0.4 inch) were cut from both sets of films and mounted at one end of separate strips of polystyrene using a double faced adhesive tape (Double Stick, 3M Co.).

Test samples were prepared containing 0.2, 0.6, 1.1 and 3.3 mM KCl in 100 mM tris-hydroxymethyl-

amino methane buffer (pH 8.0). An aliquot of each test sample (30 µl) was applied to a separate film, and the change in reflectance monitored for 130 to 150 seconds in a SERALYZER®. The reflectance values were converted to (K/S) as in example 9.2. The resultant (K/S) values (end point) are recorded in the following table.

Response (K/S) of Films to Potassium

| $TiO_2$ (% by weight) | Thickness (mils) (mm) | [$K^x$] mM .2 | .6 | 1.1 | 3.3 |
|---|---|---|---|---|---|
| 0 | (6.75) 0,172 | .6300 | 1.1465 | 1.7825 | 2.970 |
| 0 | (15.0) 0,385 | .8470 | 1.5780 | 2.1685 | 3.600 |
| 0 | (30.0) 0,761 | 1.0265 | 1.8555 | 2.545 | 4.029 |
| +.75% $TiO_2$ | | | | | |
| 0.75% | (3.60) 0,092 | .1781 | .2833 | .3596 | .5474 |
| 0.75% | (6.75) 0,172 | .1984 | .3259 | .4144 | .6163 |
| 0.75% | (15.0) 0,385 | .1924 | .3147 | .4064 | .6052 |
| 0.75% | (30.0) 0,761 | .1910 | .2919 | .3794 | .5791 |

The data shows that varying thicknesses of films containing $TiO_2$ have little effect on (K/S) for a particular $K^+$ concentrations; whereas relatively large differences are observed absent $TiO_2$ in the formulation.

**Claims**

1. A test means for determining the presence of an ion in an aqueous test sample, the test means comprising a hydrophilic carrier matrix incorporated with finely divided globules of a hydrophobic vehicle, the vehicle containing

an ionophore capable of forming a complex with the ion, and

a reporter substance capable of interacting with the complex of ionophore and ion to produce a detectable response.

2. A test means according to claim 1, characterized in that the hydrophilic carrier matrix is a hydrophilic polymer, preferably gelatine, agarose, poly(vinyl alcohol), poly(propyleneimine), carrageenan or alginic acid.

3. A test means according to claim 1 or 2 characterized in that the hydropholic carrier matrix additionally comprises paper.

4. A test means according to anyone of claims 1—3, characterized in that the ionophore is a coronand, a cryptand or a podand, preferably valinomycin, 4,7,13,16,21-pentaoxa-1,10-diazabicyclo[8,8,5]tricosane, 4,7,13,-16,21,24-hexaoxa-1,10-diazabicyclo[8,8,8]hexacosane, 4,7,13,18-tetraoxa-1,10-diazabicyclo[8,5,5]-eicosane, 12-crown-4, 15-crown-5, 18-crown-6, dibenzo-18-crown-6, and dicyclohexano-18-crown-6.

5. A test means according to any of claims 1 to 4, characterized in that the hydrophilic carrier matrix is additionally incorporated with $TiO_2$.

6. A test means according to anyone of claims 1 to 5, characterized in that the reporter substance is a compound having the structure

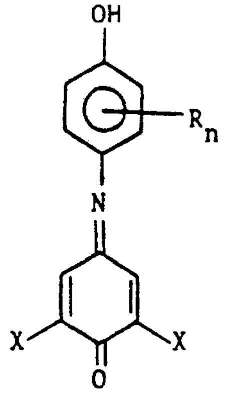

in which X is a halogen —CN, —SCN, —OCN, —$N_3$, —COR, —COOR, —CONHR, —$CF_3$, —$CCl_3$, —$NO_2$, —$SO_2CF_3$, —$SO_2CH_3$, or —$SO_2C_6H_4CH_3$, in which R is alkyl or aryl; R is a 2-, 3-, 5- and/or 6-position substituent selected from lower and intermediate alkyl i.e. an alkyl having 1 to 12 carbon atoms, aryl and a fused ring at the 2,3- or 5,6-positions; and n is 0—4.

7. A test means according to any one of claims 1 to 5, characterized in that the reporter substance is a compound having the structure

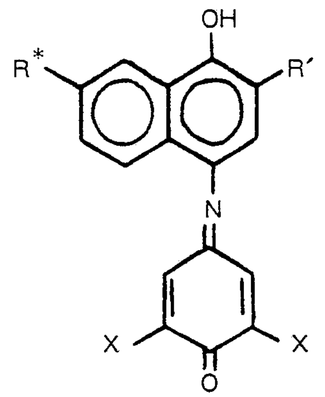

in which R′ is H or lower alkyl i.e. an alkyl having 1 to 4 carbon atoms, preferably methyl, R* is H or intermediate alkyl — i.e. an alkyl having 4 to 12 carbon atoms — preferably n-decyl, and X is halogen —CN, —SCN, —OCN, —$N_3$, —COR, —COOR, —CONHR, —$CF_3$, —$CCl_3$, —$NO_2$, —$SO_2CF_3$, —$SO_2CH_3$, or —$SO_2C_6H_4CH_3$, in which R is alkyl or aryl.

8. A test means according to any one of claims 1 to 7, characterized in that the reporter substance is one capable of producing the appearance of, or change in, fluorescence in the presence of the complex of the ionophore and ion, and preferably is fluorescein or a derivative.

9. A test device for determining the presence of an ion in an aqueous test sample, the device comprising

a elongated support member having an upper substantially flat face, and

a test means according to anyone of claims 1 to 8 affixed to the flat face of the support member.

10. A method for preparing a test device for determining the presence of an ion in an aqueous test sample, the method comprising the steps of

forming a first mixture of water and a hydrophilic polymer,

foprming a second mixture of a hydrophobic vehicle, an ionophore capable of forming a complex with the ion, and a reporter substance capable of interacting with the complex of the ionophore and ion to produce a detectable response,

combining the first and second mixtures to produce a stable emulsion of finely divided globules of the second mixture in the first mixture,

coating the emulsion onto an elongated support member having an upper, substantially flat face, and

evaporating the water from the emulsion to produce a hydrophilic carrier matrix incorporated with finely divided globules of the second mixture, the matrix being thereby affixed to the flat face of the support member.

11. A method for determining the presence of an ion in an aqueous test sample, the method comrpising contacting the test sample with a test means of anyone of claims 1 to 8, or a test device of claim 9, and observing a detectable response.

**Patentansprüche**

1. Testmittel zur Bestimmung der Anwesenheit von Ionen in einer wässrigen Testprobe, wobei die Testeinrichtung eine hydrophile Trägermatrix, in welche feinverteilte Kügelchen eines hydrophoben Trägers inkorporiert sind, umfasst und der Träger ein Ionophor, das in der Lage ist, mit dem ion einen Komplex zu bilden, und eine Reportersubstanz, die in der Lage ist, mit dem Komplex aus dem Ionophor und dem Ion unter Ausbildung einer nachweisbaren Ansprechung zu reagieren, enthält.

2. Testmittel gemäss Anspruch 1, dadurch gekennzeichnet, dass die hydrophile Trägermatrix ein hydrophiles Polymer, vorzugsweise Gelatine, Agarose, Poly(vinylalkohol), Poly(propylenimin), Carrageenan oder Alginsäure ist.

3. Testmittel gemäss Anspruch 1 oder 2, dadurch gekennzeichnet, dass die hydrophile Trägermatrix zusätzlich Papier umfasst.

4. Testmittel gemäss einem der Ansprüche 1 bis 3, dadurch gekennzeichnet, dass das Ionophor ein Koronand, ein Kryptand oder ein Podand, vorzugsweise Valinomycin, 4,7,13,16,21-Pentaoxa-1,10-diazabicyclo[8,8,5]tricosan, 4,7,13,-16,21,24-Hexaoxa-1,10-diazabicyclo[8,8,8]hexacosan, 4,7,13,18-Tetraoxa-1,10-diazabicyclo[8,5,5]eicosan, 12-Kronen-4, 15-Kronen-5, 18-Kronen-6, Dibenzo-18-kronen-6 und Dicyclohexano-18-kronen-6 ist.

5. Testmittel gemäss einem der Ansprüche 1 bis 4, dadurch gekennzeichnet, dass die hydrophile Trägermatrix zusätzlich $TiO_2$ inkorporiert enthält.

6. Testmittel gemäss einem der Ansprüche 1 bis 5, dadurch gekennzeichnet, dass die Reportersubstanz eine Verbindung mit der Struktur

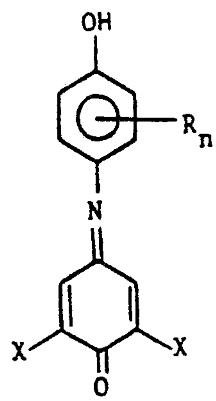

ist worin X ein Halogen, CN, $—SCN$, $—OCN$, $—N_3$, $—COR$, $—COOR$, $—CONHR$, $—CF_3$, $—CCl_3$, $—NO_2$, $—SO_2CF_3$, $—SO_2CH_3$, oder $—SO_2C_6H_4CH_3$, worin R Alkyl oder Aryl bedeutet, ist, R ein Substituent in der 2-, 3-, 5- und/oder 6-Stellung ist und ausgewählt ist aus Niedrig- und mittlerem Alkyl, d.h. einem Alkyl mit 1 bis 12 Kohlenstoffatomen, Aryl und einem kondensierten Ring an der 2,3- oder 5,6-Stellung ist und n 0 bis 4 bedeutet.

7. Testmittel gemäss einem der Ansprüche 1 bis 5, dadurch gekennzeichnet, dass die Reportersubstanz eine Verbindung der Struktur

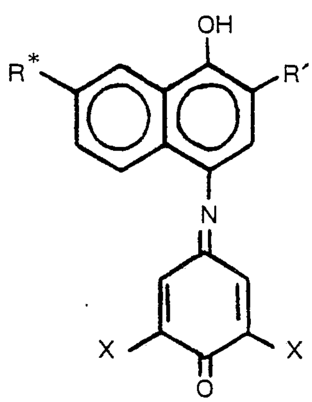

ist, worin R′ H oder Niedrigalkyl, d.h. ein Alkyl mit 1 bis 4 Kohlenstoffatomen, vorzugsweise Methyl, bedeutet, R H oder ein mittleres Alkyl, d.h. ein Alkyl mit 4 bis 12 Kohlenstoffatomen, vorzugsweise n-Decyl, bedeutet, und X Halogen $—CN$, $—SCN$, $—OCN$, $—N_3$, $—COR$, $—COOR$, $—CONHR$, $—CF_3$, $—CCl_3$, $—NO_2$, $—SO_2CF_3$, $—SO_2CH_3$, oder $—SO_2C_6H_4CH_3$, worin R Alkyl oder Aryl bedeutet, ist.

8. Testmittel gemäss einem der Ansprüche 1 bis 7, dadurch gekennzeichnet, dass die Reportersubstanz

in der Lage ist, das Aussehen oder eine Veränderung oder eine Fluoreszenz in Gegenwart des Komplexes aus dem Ionophor und dem Ion auszubilden und vorzugsweise Fluoreszein oder ein Derivat davon ist.

9. Testeinrichtung zur Bestimmung der Gegenwart eines Ions in einer wässrigen Testprobe, umfassend einen länglichen Trägerteil mit einer oberen, im wesentlichen flachen Oberfläche, und ein Testmittel gemäss einem der Ansprüche 1 bis 8, das an der flachen Oberfläche des Trägerteils befestigt ist.

10. Verfahren zur Herstellung einer Testeinrichtung zum Nachweis der Gegenwart eines Ions in einer wässrigen Testprobe, dadurch gekennzeichnet, dass das Verfahren folgende Stufen umfasst:

Ausbildung einer ersten Mischung aus einem hydrophilen Polymer und Wasser,

Ausbildung einer zweiten Mischung aus einem hydrophoben Träger, einem Ionophor, das in der Lage ist, mit dem Ion einen Komplex zu bilden, und einer Reportersubstanz, die in der Lage ist, mit dem Komplex aus dem Ionophor und dem Ion zu reagieren, unter Ausbildung einer nachweisbaren Ansprechung,

Kombinieren der ersten und der zweiten Mischung unter Ausbildung einer stabilen Emulsion von feinverteilten Kügelchen aus der zweiten Mischung in der ersten Mischung,

Beschichten des länglichen Trägerteils mit einer oberen, im wesentlichen flachen Oberfläche mit der Emulsion, und

Verdampfen des Wassers aus der Emulsion unter Ausbildung einer hydrophilen Trägermatrix, in welcher feinverteilte Kügelchen aus der zweiten Mischung inkorporiert sind und wobei die Matrix dadurch an der flachen Oberfläche des Trägerteils befestigt ist.

11. Verfahren zur Bestimmung der Gegenwart eines Ions in einer wässrigen Testprobe, dadurch gekennzeichnet, dass man die Testprobe mit einem Testmittel gemäss einem der Ansprüche 1 bis 8 oder einer Testvorrichtung gemäss Anspruch 9 in Berührung bringt und eine nachweisbare Ansprechung abliest.

**Revendications**

1. Système analytique destiné à déterminer la présence d'un ion dans un échantillon analytique aqueux, le système analytique comprenant une matrice hydrophile servant de support à laquelle sont incorporés des globules finement divisés d'un véhicule hydrophobe, le véhicule contenant

une substance ionophore capable de former un complexe avec l'ion, et

une substance révélatrice capable d'interagir avec le complexe de la substance ionophore et de l'ion pour produire une réponse détectable.

2. Système analytique suivant la revendication 1, caractérisé en ce que la matrice hydrophile servant de support est un polymère hydrophile, de préférence la gélatine, l'agarose, l'alcool polyvinylique, la poly(propylène-imine), la carraghénine ou l'acide alginique.

3. Système analytique suivant la revendication 1 ou 2, caractérisé en ce que la matrice hydrophile servant de support comprend en outre du papier.

4. Système analytique suivant l'une quelconque des revendications 1 à 3, caractérisé en ce que la substance ionophore est un coronand, un cryptand ou un podand, de préférence la valinomycine, le 4,7,13,16,21-penta-oxa-1,10-diazabicyclo[8,8,5]tricosane, le 4,7,13,16,21,24-hexa-oxa-1,10-diazabicyclo-[8,8,8]hexacosane, le 4,7,13,18-tétra-oxa-1,10-diazabicyclo[8,8,5]eicosane, le 12-couronne-4, le 15-couronne-5, le 18-couronne-6, le dibenzo-18-couronne-6 et le dicyclohexano-18-couronne-6.

5. Système analytique suivant l'une quelconque des revendications 1 à 4, caractérisé en ce que du $TiO_2$ est en outre incorperé à la matrice hydrophile servant de support.

6. Système analytique suivant l'une quelconque des revendications 1 à 5, caractérisé en ce que la substance révélatrice est un composé répondant à la formule structurale

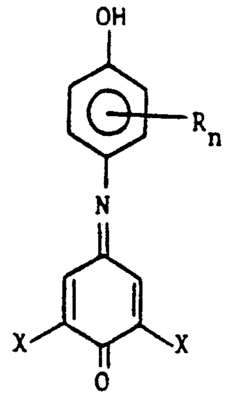

dans laquelle X est un halogène, un groupe CN, SCN, OCN, $N_3$, COR, COOR, CONHR, $CF_3$, $CCl_3$, $NO_2$, $SO_2CF_3$, $SO_2CH_3$, ou $SO_2C_6H_4CH_3$, dans lequel R est un groupe alkyle ou aryle, R est un substituant en position 2, 3, 5 et/ou 6, choisi entre des groupes alkyle inférieures et intermédiaires, c'est-à-dire alkyle ayant 1 à 12 atomes de carbone, aryle et un noyau condensé en positions 2,3 ou 2,6; et *n* a une valeur de 0 à 4.

7. Système analytique suivant l'une quelconque des revendications 1 à 5, caractérisé en ce que la

substance révélatrice est un composé répondant à la formule structurale

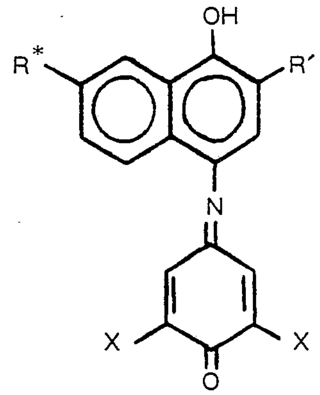

rev.

dans laquelle R′ représente un atome d'hydrogène ou un groupe alkyle inférieur, c'est-à-dire un groupe alkyle ayant 1 à 4 atomes de carbone, de préférence le groupe méthyle, R* représente un atome d'hydrogène ou un groupe alkyle intermédiaire, c'est-à-dire un groupe alkyle ayant 4 à 12 atomes de carbone, de préférence le groupe n-décycle, et X est un halogène, un groupe CN, SCN, OCN, $N_3$, COR, COOR, CONHR, $CF_3$, $CCl_3$, $NO_2$, $SO_2CF_3$, $SO_2CH_3$, ou $SO_2C_6H_4CH_3$, dans lequel R est un groupe alkyle ou aryle.

8. Système analytique suivant l'une quelconque des revendications 1 à 7, caractérisé en ce que la substance révélatrice est une substance capable de faire apparaître une, ou bien de produire une variation de, fluorescence en présence du complexe de la substance ionophore et de l'ion, et est de préférence le fluorescéine ou un de ses dérivés.

9. Dispositif analytique destiné à déterminer la présence d'un ion dans un échantillon analytique aqueux, dispositif comprenant

un élément allongé servant de support, ayant une face supérieure pratiquement plate, et

un système analytique suivant l'une quelconque des revendictions 1 à 8, fixé sur la face plate de l'élément servant de support.

10. Procédé de préparation d'un dispositif analytique destiné à déterminer la présence d'un ion dans un échantillon analytique aqueux, le procédé comprenant les étapes consistant

à former un premier mélange d'eau et d'un polymère hydrophile,

à former un second mélange d'un véhicule hydrophile, d'un substance ionophore capable de former un complexe avec l'ion, et d'une substance révélatrice capable d'interagir avec le complexe de la substance ionophore et de l'ion pour produire une réponse détectable,

à mélanger les premier et second mélanges pour produire une émulsion stable de globules finement divisés du second mélange dans le premier mélange,

à fixer par revêtement l'émulsion sur un élément allongé servant de support, ayant une face supérieure pratiquement plate, et

à faire évaporer l'eau de l'emulsion pour produire une matrice hydrophile servant de support à laquelle sont incorporés des globules finement divisés du second mélange, la matrice étant fixée sur la face plate de l'élément servant de support.

11. Méthode pour déterminer la présence d'un ion dans un échantillon analytique aqueux, la méthode consistant à mettre en contact l'échantillon analytique avec un système analytique suivant l'une quelconque des revendications 1 à 8, ou bien avec un dispositif analytique suivant la revendication 9, et à observer une réponse détectable.

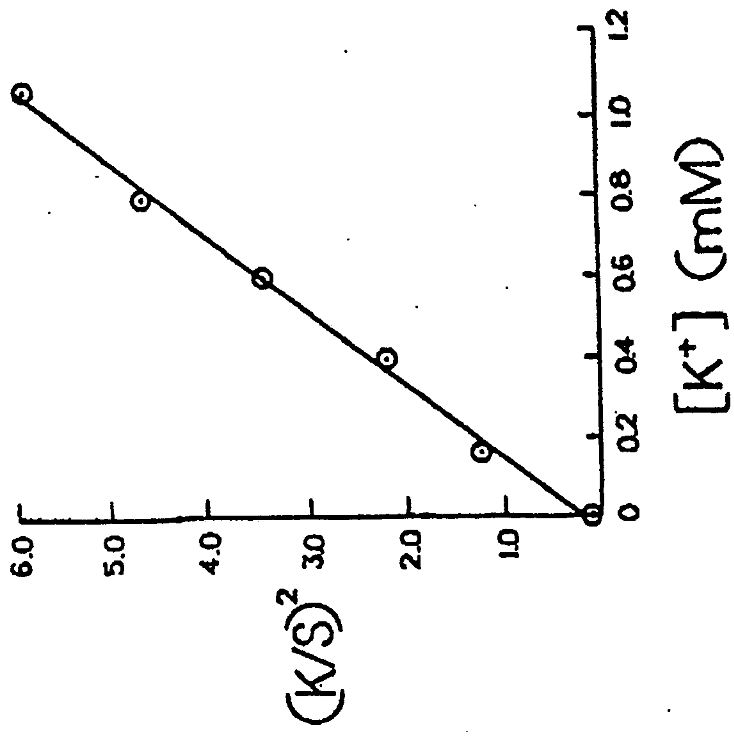
$(K/S)^2$
6.0
5.0
4.0
3.0
2.0
1.0
0
0.2
0.4
0.6
0.8
1.0
1.2
$[K^+]$ (mM)

FIG. 1

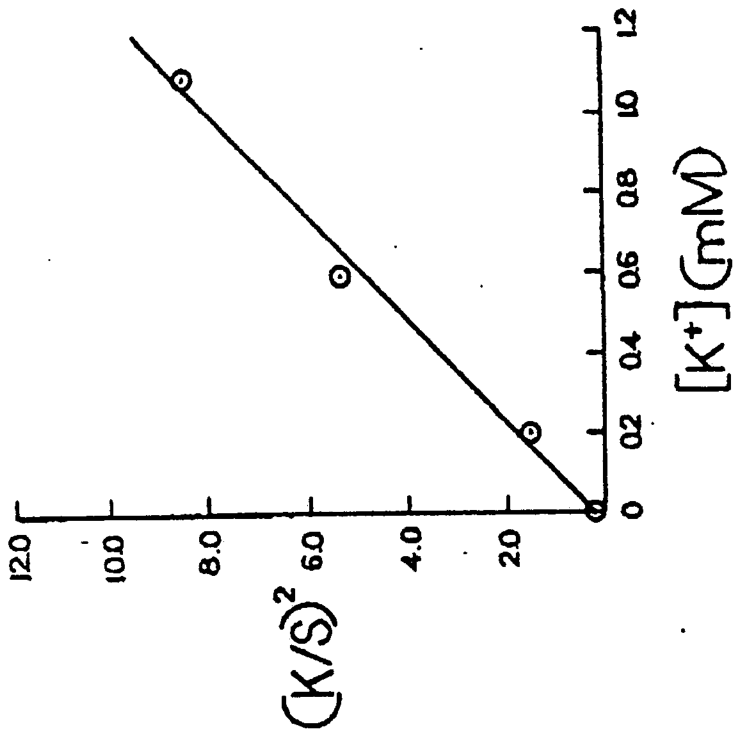
$(K/S)^2$
12.0
10.0
8.0
6.0
4.0
2.0
0
0.2
0.4
0.6
0.8
1.0
1.2
$[K^+]$ (mM)

FIG. 2

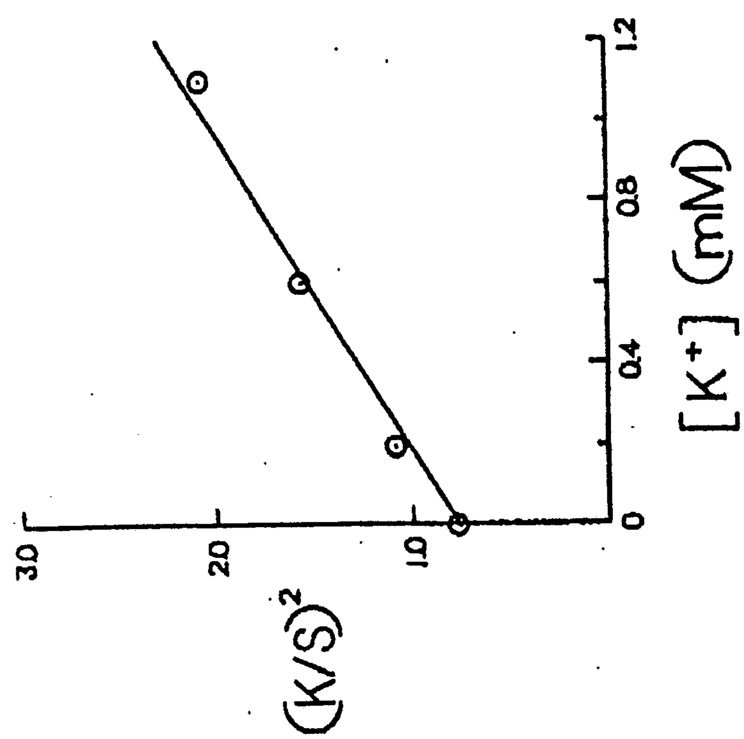


FIG. 3

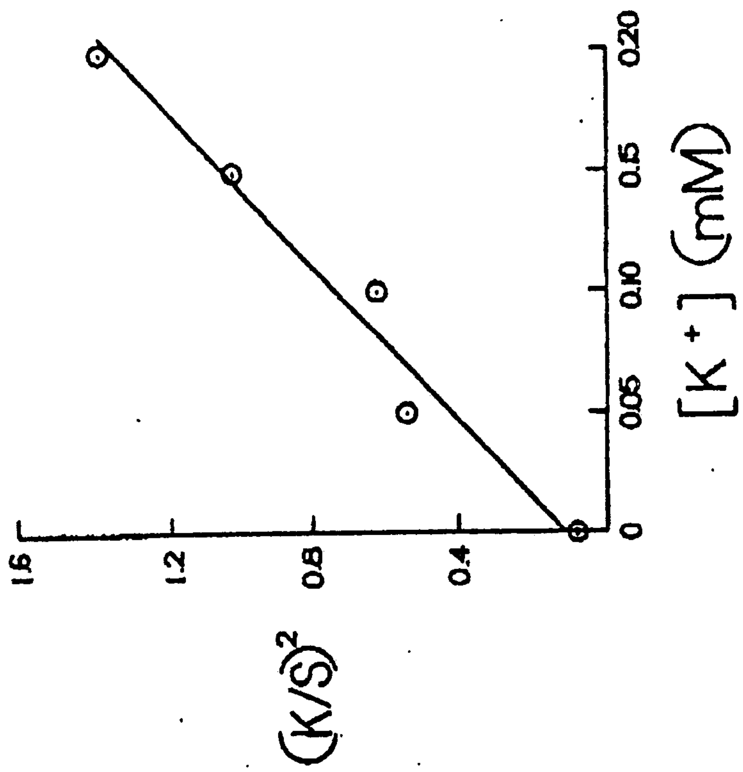


FIG. 4

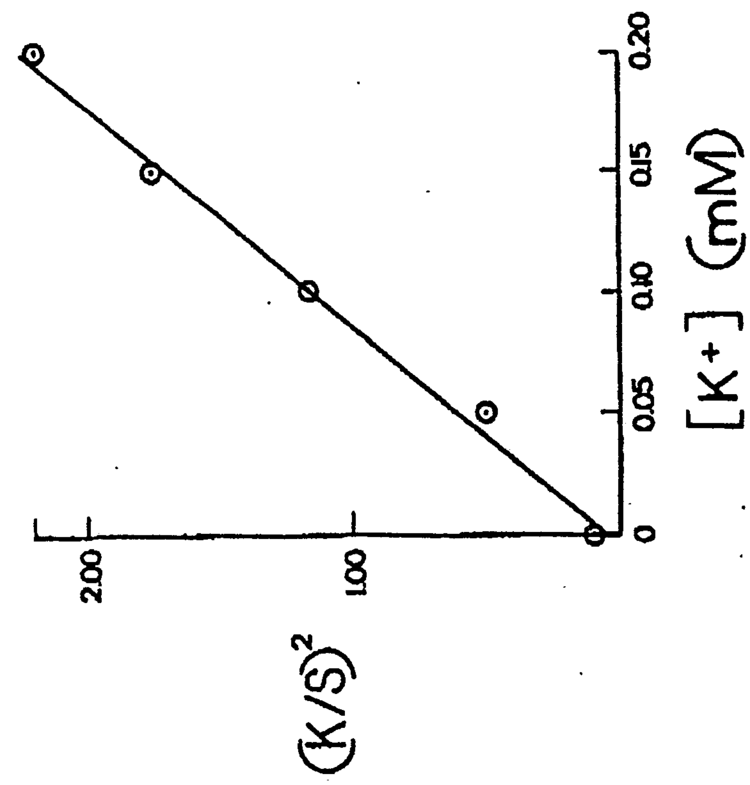


FIG. 5

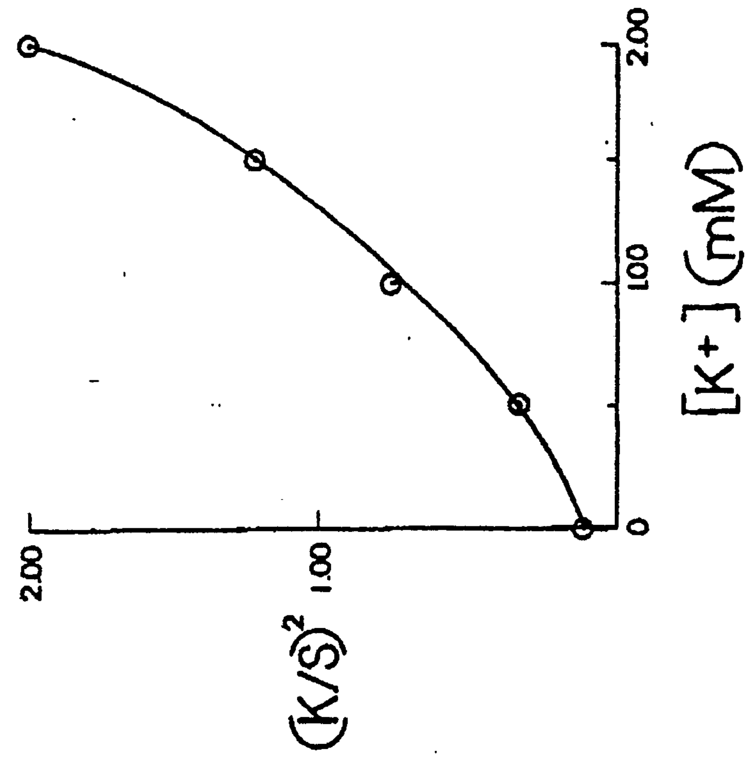


FIG. 6

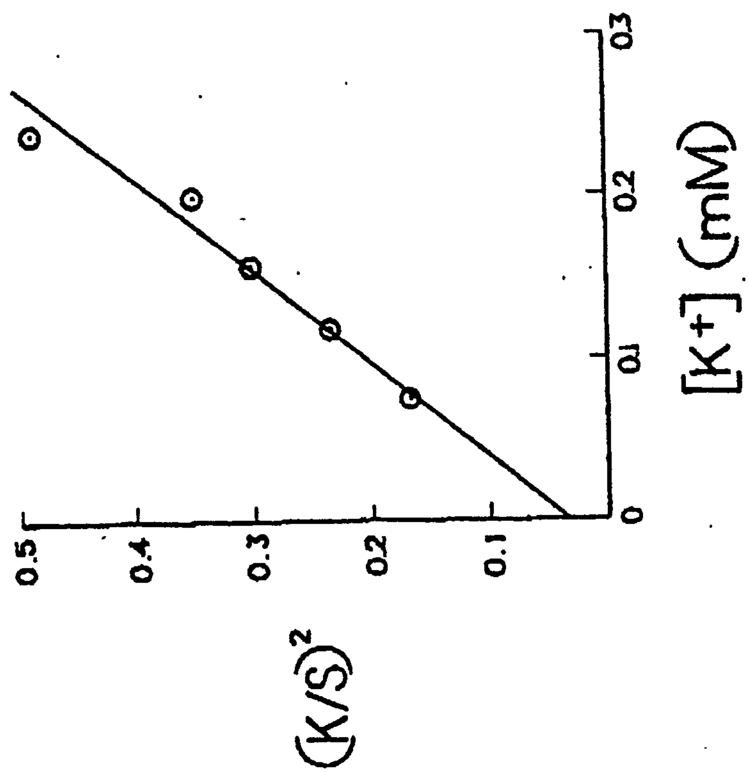


FIG. 7

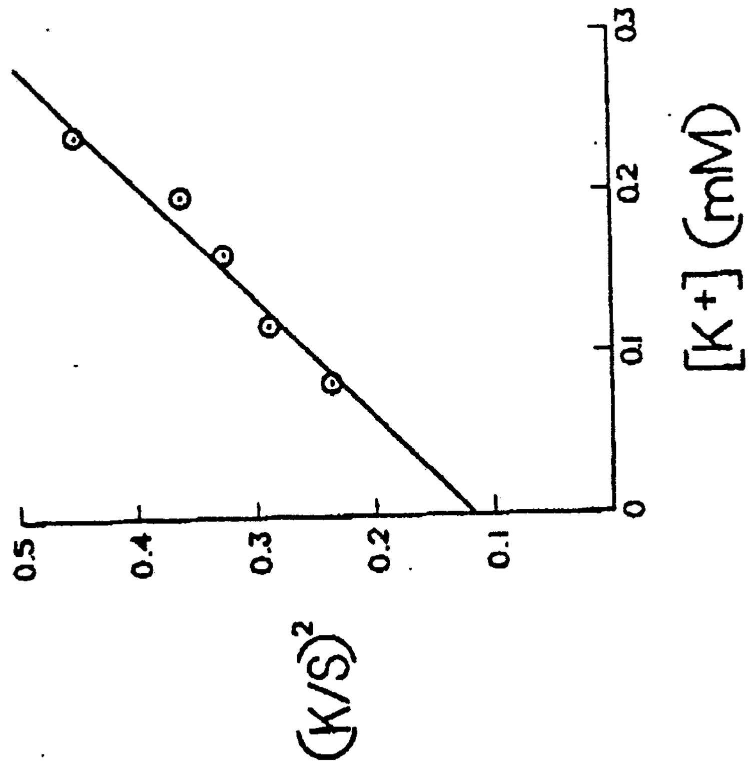


FIG. 8